Europäisches Patentamt

European Patent Office

Office européen des brevets

(19)

(11) Publication number: **0 028 666**
**B1**

(12) **EUROPEAN PATENT SPECIFICATION**

(45) Date of publication of patent specification: **06.04.83**

(51) Int. Cl.³: **C 10 G 9/28, B 01 J 8/10**

(21) Application number: **79302542.0**

(22) Date of filing: **13.11.79**

(54) **Process and apparatus for thermally processing heavy hydrocarbon-containing liquids.**

| | |
|---|---|
| (43) Date of publication of application: **20.05.81 Bulletin 81/20** | (73) Proprietor: **ALBERTA OIL SANDS TECHNOLOGY AND RESEARCH AUTHORITY** 7th Floor Petroleum Plaza South Tower 9915-108 Street **Edmonton, Alberta T5K 2g8 (CA)** |
| (45) Publication of the grant of the patent: **06.04.83 Bulletin 83/14** | |
| | (72) Inventor: **Taciuk, William** **8043 Chardie Road** **SW Calgary, Alberta (CA)** |
| (84) Designated Contracting States: **BE DE FR GB IT NL SE** | |
| (56) References cited: **GB - A - 563 293** **US - A - 1 450 327** **US - A - 2 097 084** **US - A - 2 388 642** **US - A - 3 094 479** **US - A - 3 481 720** | (74) Representative: **Hind, Raymond Stenton et al, Mathisen, Macara & Co. Lyon House Lyon Road Harrow, Middlesex, HA1 2ET (GB)** |

Courier Press, Leamington Spa, England.

# 0 028 666

Process and apparatus for thermally processing heavy hydrocarbon-containing liquids.

The present invention relates to a process for upgrading heavy hydrocarbon-containing feed stock whereby at least a portion of the hydrocarbons are thermally cracked and vapourised to produce a gaseous product.

Large deposits of bituminous sands and heavy oil-bearing formations are found in various areas of the world. The wellhead products obtained by in situ recovery from these sources usually comprise a liquid containing a range of hydrocarbons, water, steam, sulphur, entrained fine solids, metals, entrained gases and special agents added during recovery. The hydrocarbons may in large part be characterised by an API gravity less than about 25° API.

In conventional oil refinery processes a high viscosity, low API tower bottoms stream of hydrocarbons is obtained during processing by atmospheric and vacuum distillation methods. These tower bottoms require thermal cracking to be utilized in a downstream refining process.

According to the invention, there is provided a process for upgrading heavy hydrocarbons, such process employing direct thermal treatment effected in an apparatus having horizontal, concentric, radially spaced inner and outer rotatable tubes in which one axial end is the feed end and the opposite axial end is the product end, said inner tube forming an open cylindrical inner processing zone, said tubes forming between them an open annular space having a combustion zone, characterised in that the process comprises continuously advancing hot particulate solids through the inner tube from the feed end to the product end and back through the annular space, depositing the hydrocarbons as a liquid onto the hot solids, cascading and mixing the solids and hydrocarbons as they advance through the inner processing zone to achieve beneficial heat transfer and thereby vaporize hydrocarbons and form carbon on the solids, withdrawing by suction the hydrocarbon vapours produced in the inner tube, transferring carbon-coated solids from the product end of the inner tube into the combustion zone cascading and repeatedly raising and dropping the carbon-coated solids in the combustion zone while introducing oxygen-containing gas thereinto to burn at least part of the carbon and heat the remainder of the solids, transferring burned hot solids from the feed end of the annular space into the feed end of the inner tube, withdrawing by suction vapours produced in the combustion zone, and maintaining seals against substantial gaseous flow between the combustion zone and the inner processing zone.

Further according to the invention, there is provided apparatus for carrying out the foregoing method, comprising a substantially horizontal rotatable inner tube defining an inner processing zone therein, a rotatable outer tube generally concentric with the inner tube and circumscribing at least a portion of the inner tube, the tubes being rigidly interconnected for rotation together and cooperating to form an annular space, the annular space providing a combustion zone, and means for introducing oxygen-bearing gas into the combustion zone, characterised in that the apparatus further comprises a stationary recycle end assembly associated with the outer tube for substantially sealing a recycle end thereof, a stationary produce end assembly associated with the outer tube for substantially sealing a product end thereof, inner advancing means secured to the inner surface of the inner tube and extending inwardly by only a short distance so as to leave the inner zone substantially open, outer advancing means secured to the inner surface of the outer tube and extending inwardly by only a short distance so as to leave the annular space substantially open, feed means extending into the inner processing zone for depositing the liquid thereinto onto particulate solids being advanced therethrough, vapour removal means extending into the inner processing zone for withdrawing hydrocarbon vapours from the zone, said vapour removal means maintaining a negative pressure relative to atmosphere pressure, means connected with the inner tube at the product end, for transferring carbon-carrying solids from the inner processing zone to the combustion zone, said means cooperating with the carbon-carrying solids to prevent significant gas movement between the inner processing zone and the combustion zone, means for sealing the inner tube at the recycle end, said means including recycle means connecting the recycle end of the annular space with the inner processing zone, the recycle means cooperating with the hot solids to prevent significant gas movement between the inner processing zone and the combustion zone, means for withdrawing combustion gases from the combustion zone, said means maintaining a negative pressure relative to atmospheric pressure, in the combustion zone.

In operation, the charge of solids circulates continuously through the inner processing zone and the annular space. The solids are hot as they enter the recycle end of the inner tube. The hydrocarbon-containing liquid is deposited on them and at least a portion of such hydrocarbons vaporize and are cracked, thereby generating gaseous hydrocarbon vapours and simultaneously forming a carbon deposit on the solids particles (termed hereafter "coked solids"). The constant cascading effects intimate mixing of the liquid and solids and promotes uniform heat transfer. The coked solids are then discharged into the combustion zone where at least part of the coke is burned to heat the solids. Supplemental heat may be supplied by a burner to assist in raising the temperature of the solids. Combustion-heated solids are then recycled in the inner tube to repeat the process.

By providing separate means for withdrawing the combustion and product gases in combination with recycling and transfer means operative to provide sealing functions at the ends of the inner tube,

2

there is thereby provided a particular system for segregating the two gaseous stream. This system is compatible with the utilization of an open-cylindrical processing zone and an open annular space in the processor. Because these spaces are open, a desirable degree of mixing may be obtained therein simply by the cascading action effected by rotation of the tubes.

The invention will now be described, by way of example only with reference to the accompanying drawings, in which:

Figure 1 is a schematic diagram illustrating the process and apparatus in accordance with a preferred embodiment of the invention and one possible arrangement of external equipment for simple condensing of the hydrocarbon vapours to provide a pumpable liquid and a cooled coke by-product that can be used as a feed for boilers or furnaces for production of heat energy;

Figure 2 is an elevation, mostly in section, taken along the rotational axis of the inner and outer tubes, illustrating details and representative features in the construction and operation of the inner and outer tubes and end frames of the apparatus;

Figure 3 is a cross-sectional view taken along line 110X of Figure 2 and illustrates the arrangement and operating principles of the recycle ring portion of the apparatus;

Figure 4 is a cross-sectional view taken along line 111X of Figure 2 and illustrates the arrangement of pipes and nozzles for the oxygen-bearing gas system;

Figure 5 is a cross-sectional view taken along line 112X of Figure 2 and illustrates the product end seal and solid particle discharge from the inner tube to the outer tube. A cross-section through the seal is included for further clarification; and

Figure 6 is a cross-sectional view taken along line 113X of Figure 5 and illustrates the product end seal.

The apparatus to be described is intended for thermally treating heavy hydrocarbon-containing liquids, such as refinery bottoms of product from an in situ heavy soil recovery process.

The apparatus 10X comprises concentric, radially spaced inner and outer tubes 11X, 12X. The two tubes are connected together in the manner previously described and are rotated about their common long axis. The ends of the inner tube terminate in end frames which rotate with the tube and seal its ends to contain generated gases, the recycle end frame being merely a seal plate 200X while the product end frame 91X provides an inner to outer tube seal arrangement as well as functioning as the means for transferring solids from inner tube into the annular space between the tubes. A vapour discharge pipe 86X extends through the product end frame 91X into the inner tube 11X. The inlet and outlet ends of the outer tube 12X extend into stationary end assembly 14X and a movable end assembly 15X respectively. Roller mounting rings 45X, 46X are connected to the outer tube so that the tubes may be rotated by a motor 51X and ring gear 52X.

The tubes define or form a sequence of processing zones. More particularly, at its inlet end the inner tube 11X forms a mixing zone 32X wherein recycled hot solids are mixed to provide temperature equilibrium prior to contact with hydrocarbon-bearing liquid. Downstream of the mixing zone, the inner tube provides a vapour zone 33X wherein the liquid is deposited on the hot recycled solids and hydrocarbons are vapourized and cracked. The mixing and vapour zones together form an inner processing zone which is a substantially open cylindrical space. A combustion zone 34X is provided in the open annular space formed between the tubes, wherein carbon-coated solids are burned to provide required heat for the process. At the left-hand end of the annular space, a recycle zone 35X is provided wherein may be conducted screening, oversize particle rejection, undersize particle recycle and intermittent crushing of oversize particle operations. Finally, there is provided in the inlet end assembly 14X a cooling zone 36X, wherein oversize particles are cooled and discharged.

The tubes are initially charged with solids, for example coke or sand particles. These solids are advanced through the mixing, vapour and combustion zones 32X, 33X, 34X using advancing elements attached to the inner surfaces of the tubes, as previously described. More particularly, longitudinally rows of advancing elements 38X, 39X and 40X formed along the inner surface of the inner tube and similar advancing elements 43X, 44X formed along the inner surface of the outer tube cause the solids to move through the two tubes as they are rotated about their long axis. The number of elements as well as their size and degree of inclination may be varied to optimize the rate of advance through each zone.

Feed liquid containing heavy hydrocarbons is sprayed or deposited on the hot solids as they advance through the vapour zone 33X. Preferably, the feed liquid is preheated by heat exchange with the produced vapours in the coolers 17X, 18X. The pre-heated feed liquid may then be flashed in chamber 406X and produced gaseous light ends and water vapour returned to the condenser 19X. The pre-heated liquid is introduced into the vapour zone 33X through pipe 407X and sprayed on the moving solids through the nozzles 408X. The continuous mixing and cascading of the solids in the vapour zone ensures a uniform temperature of these particles so that hot and cold spots are minimized as the liquid is applied. Control of the rate of liquid application may be utilized to ensure rapid vapourising of the hydrocarbons and close control of the contact time and hence the degree of cracking occurring in the vapour zone.

The ends of the inner tube are sealed to prevent the uncontrolled escape of the gases generated in the vapour zone 33X. At the recycle end, the plate 200X provides a closure which is penetrated only by the hot air pipe header 96Xa and the hot solids recycle pipes 66X. At the product end, an end assembly 91X provides a mechanical and moving solids seal against the escape of gases.

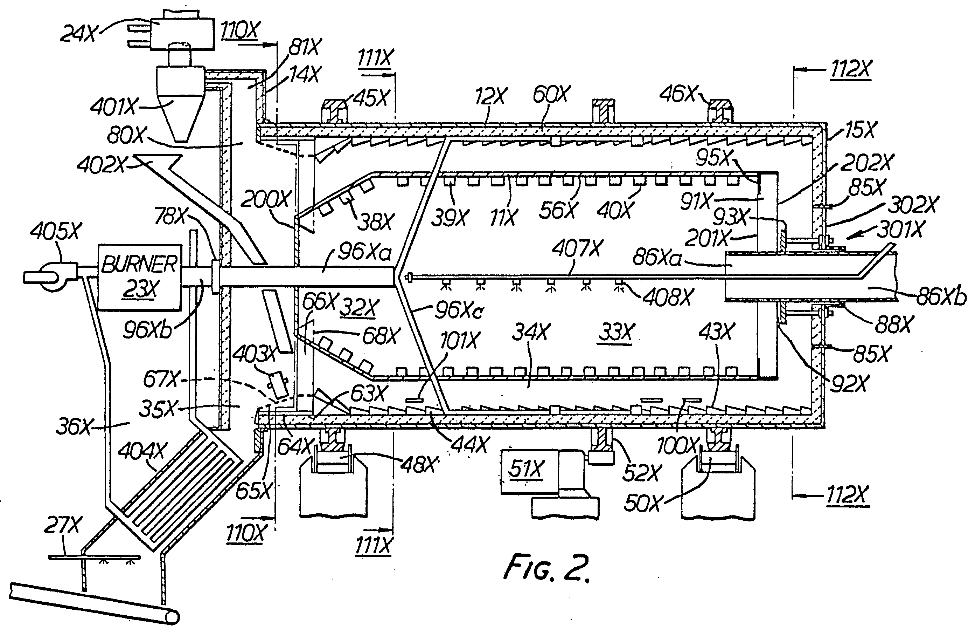

The carbon-coated particles are continuously transferred from the vapour zone 33X of the inner tube into the annular combustion zone 34X defined between the two tubes. In this connection, an end assembly 91X for accomplishing this is now described. Refer to Figures 2 and 6. The end assembly 91X is fastened to the product end of the inner tube 11X and is illustrated in Figure 5. The assembly is formed by two radial end plates 201X, 202X fastened together by a series of baffles 90X which form compartments. Carbon-coated particles are fed into these compartments through openings 95X located in the inner radial plate 201X. As the tubes rotate, the particles in the compartments move towards the central axis and, at a suitable angle, are discharged to the outer tube by way of a circular slot 92X located around rotating vapour discharge pipe segment 86Xa in the plane of the outer radial plate. The controlled discharging stream of solid particles forms a seal during the discharge period. The circular slot 92X is further sealed during the remaining 360 degrees of rotation by an adjustable stationary seal plate 93X. Adjusting mechanism 94X maintains the clearance between the stationary seal plate 93X and the rotating circular opening 92X. Mechanism 94X is hinged so that oversize or tramp material exiting through the seal openings 92X will momentarily move the seal plate away from its normal position allowing the oversize or tramp material to discharge into the outer tube 12X.

A stationary product end assembly 301X is provided to seal the movable end assembly 15X. The assembly 301X comprises a ring element 302X and a ring seal 85X which co-operate to close off the aperture formed by the end assembly 15X. The vapour discharge pipe 86X is made up of an external stationary section 86Xb, securely fastened to the ring element 302X, and a rotating portion 86Xa which is fastened to and rotates with the assembly 91X. The stationary product end assembly 301X includes a rotary pipe seal 88X which seals around discharge pipe 86X.

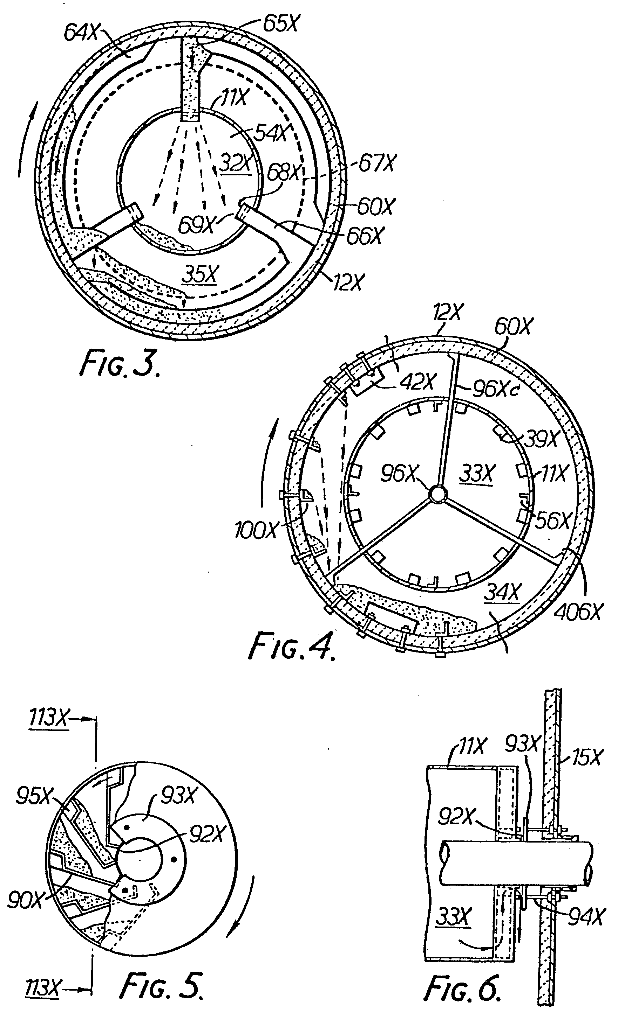

Means are provided for supplying oxygen, as in the form of air, to the central portion of the combustion zone 34X. Such means may comprise a burner 23X, supplied with air by a fan 405X, which forces pre-heated air through the centre rotating pipe assembly 96X. The pipe assembly 96X is shown in Figures 2 and 4 and comprises stationary pipe 96Xb, rotating piper header 96Xa and a number of radially extending pipes 96Xc terminating at injection nozzles 406X. The stationary pipe 96Xb and rotating pipe header 96Xa are connected by a suitable pipe seal 78X. High velocity combustion air exits from the nozzles 406X and creates turbulent conditions in the solid particle flows in the combustion zone. The combination of ejection velocity and the cascading of the solids in the combustion zone provide intimate mixing of the carbon-coated particles and oxygen enabling rapid and complete combustion to take place.

The heated solid materials continue their travel toward the recycle or left-hand of the apparatus where a screening element separates oversized material and recycle fixtures divert part or all of the undersize material back into the inner tube. More particularly, the screening and recycle fixture may best be described by joint reference to Figures 2 and 3, screens an oversize product and an undersize product on screen 67X. This screen has an opening size that is determined by the requirements of downstream coke users and by the recycle particle size requirements. A series of two or more recycle pipes 66X coupled to plates 65X, 67X, 64X, and 63X and placed at approximately equal intervals along the inner tube 11X circumference, are used to lift and move recycled particles back into the inner tube while substantially retaining a solid particle seal between the inner and outer tube atmosphere. Undersize particles are collected in the area 64X between partial tubes 63X and 64X and move along this confined area until obstructed by plate 65X. The tapered recycle tube 66X contains the recycle until a degree of rotation is achieved so that the solid particles are discharged at a controlled rate into the inner tube 11X. The rate of material flow is adjustable by means of varying the outlet opening 69X by adjusting plate 68X.

The oversized fraction falls from the screen 67X into a coke processing and cooling system 404X.

A variable portion of the oversized particles may be crushed while still on the screen and recombined with the undersized fraction for recycling into the inner tube. More particularly, the end structure 14X comprises an impacting roller 403X for crushing oversized solids on the screen 67X.

The exhaust combustion gases from the area between the inner tube and outer tube flow through this annulus to the recycle end of the outer tube, then flow upwards along the stationary end frame where they combine with any steam produced from coke quenching. The combined exhaust gas flow exits to cyclones 401X for a coarse particle separation, through coolers 24X where sensible heat is recuperated, then scrubbed in a wet dust extractor 25X where the physical dust particles are removed. Sulphur dioxide ($SO_2$) in the exhaust gas stream is reacted with water and then with calcium (Ca) ions to produce calcium sulphate which is removed and disposed of as a waste sludge. The scrubbed sulphurless gas flow is expelled to a discharge stack by fan 26X.

Auxiliary burners 23X are used to preheat the unit for startup, maintaining temperature trim during operation, and for maintaining temperature during upset operating conditions. These burners can be located in the combustion air stream as illustrated or mounted for direct firing into the outer tube annulus at either the feed or discharge end of the apparatus.

The outer tube 12X is constructed of a metal shell having a substantially full lining 60X of refractory material. This lining is desirably constructed of an insulating refractory material which

4

exhibits abrasion resistance and contain a coarse grog. The lining provides thermal insulation to prevent excessive process heat being lost through the outer shell as well as providing protection against abrasion and chemical attack.

In addition to advancing the solid particles through the inner tube 11X and outer tube 12X by means of the inclined elements 38X, 39X, 40X, 43X and 44X it is desirable in certain zones, to lift and drop the solid particles repeatedly. The outer tube surface is partially equipped with flat or cup plate lifters 100X as illustrated on Figure 4 and Figure 2. Cup lifters have a greater lifting capacity and a larger area of discharge thus ensuring better contact between the falling solid particles and the combustion air molecules. The lifting mechanisms 100X are removably secured by balls, where possible, to the outer tube 12X.

The end assemblies 14X and 15X are suitably insulated with refractory to minimize heat losses from the process area and to protect metal surfaces from exposure to chemical attack and corrosion.

The rotating apparatus and stationary end frames are operated at near ambient pressure conditions and gas flows remain substantially separated as a result of the combination of differential pressure control and rotating sand seals. An exhaust fan, exhaust gas scrubbing and cleaning system, as well as a cooling system with cyclones is provided for containment of the gases resulting from combustion of the carbon and any steam generated during final quenching of the excess coke particles. This exhaust system controls the flow of exhaust gases so that the entire length of the outer tube is maintained at a slight negative pressure with respect to ambient pressure outside the apparatus. This ensures a slight inflow of air which will be largely consumed in the combustion process and form part of the heat balance requirements. The hydrocarbon bearing vapours are continuously extracted from the product end of the inner tube by a series of fans, compressors, vapour cleaning equipment and condensors combined with coolers. These systems control the rate of vapour flow so that the pressure differential between the inner tube and the outer tube at the product end of the apparatus is maintained near zero.

If it is desirable to obtain a very pure recovery stream of hydrocarbon vapours, the pressure in the vapourization zone is maintained at a level slightly greater than the pressure in the combustion zone. This pressure control prevents migration of the combustion produced gases into the vapourization zone. Similarly, if it is desirable to maximize recovery of hydrocarbons, the pressure in the vapourization zone is maintained at a level slightly lower than the pressure in the combustion zone.

Oxygen-bearing gases for the combustion process are injected into the solid particles being transported along the outer chamber through a series of non-plugging nozzles. These nozzles are located far enough away from the product end of the apparatus so that most of the oxygen is consumed by reaction with the coke, even under upset conditions where flow reversal might tend to move these gases towards the product end rather than the normal exit through the exhaust end of the apparatus.

The outer tube along with rotating and stationary end closures are suitable lined with refractory and insulation to prevent excess heat loss and exposure of the exterior structure to high temperature stresses. The inner and outer tube motion results in wearing of the contacting surfaces. The structure of the inner and outer contact surfaces, as well as the lifting and advancing elements is designed in easily handled units so that maintenance and replacement of worn components can be readily accomplished.

Operation of the apparatus

For the purpose of the description to follow, it is assumed that the feed liquid is a 15 to 18° API, asphaltic base crude oil that has approximately 4 percent by weight of water and solids entrained in it. Initially, the unit 10X is brought up to near operating temperature by using burner 23X which supplies hot air at approximately 649°C (1200°F) to the combustion zone. Steam is fed into the unit vapour chamber to purge out any remaining oxygen bearing gases. As the unit is being heated it is slowly rotated to ensure even heating of the complete rotating mass. When the temperature reaches approximately 482 to 538°C (900 to 1000°F) feed liquid is slowly applied into the vapour zone 33X. As the exterior handling equipment temperature stabilizes, the feed rate to the unit is increased and its rotating speed increased to the normal operating level. The rotation of the unit causes the solid particles to move through all zones of the unit as previously described.

During normal operation feed liquid containing hydrocarbons is fed through a combination of heat exchangers such as 18X and 17X which preheat the oil so that any liquids that do not require cracking can be flashed and vapourized. For typical heavy oil feeds this temperature is in the range of 316 to 371°C (600 to 700°F). The flash chamber 406X receives the preheated liquid feed and separates a vapour composed of steam and light hydrocarbons which is fed directly to the primary vapour condensor 19X, and the remaining feed liquid is pumped or fed by gravity to pipe 407X. Pipe 407X is suspended in the area of the inner and outer tube rotating axis but is coupled to stationary vapour discharge pipe 86Xb such that it does not rotate with the tubes. Sprays 408X mounted at certain levels along the bottom of pipe 407X control the location and coverage of the liquid application to the surface of the moving solid particles so that a smooth continuous rate of cracking reactions take place. The rotation of the inner tube 11X co-operates with the advancing elements 38X, 39X and 40X and variable lifting elements 56X so that the solid particles are continuously being gently mixed and moved under the sprays 408X thus ensuring an even temperature amongst the solid particles and a uniform rate of carbon build-up on the solid particles. The temperature of the recycle particles for a 15 to 18 API crude should be in the range of 538 to 649°C (1000 to 1200°F) as the particles enter zone 32X and not below 454°C (850°F) when the particles exit the inner tube after passing through the spray zone 33X. Spray pipe 407X can be rotated by an external mechanism up to 90 degrees from vertical in either a clockwise or anti-clockwise direction so that the sprays can be properly directed onto the solid particles, and partially onto the inner tube 11X of this is desirable for the process. The solid particles, cooled during their reacting period under the liquid sprays 408X, continue being moved by advancing elements 40X towards the discharge seal end assembly 91X. The solid particles enter the seal assembly through openings 95X and are elevated by contact with plate 90X and the rotation of the apparatus until they are discharged to the outer tube 12X by gravity through slot 92X.

The feed liquid upon contact with the recycled, hot, solid particles cracks to form hydrocarbon vapours which fill the internal area formed by inner tube 11X and the end closures of tube 11X. Vapour flow control fan 400X applies a slight suction to cyclones 16X, vapour pipe 86X and inner tube zone 32X and 33X. As vapours are produced they flow through discharge pipe 86X, then through cyclones 16X where coarse solids are removed. Vapour fan 400X may serve as a second dust extractor by recycling condenser heavy liquid products through the fan so that the liquid droplets may contact the fine particles and absorb them. The vapour fan discharges the hydrocarbon vapour into a condenser 19X where the vapours are cooled and condensed by contact with packed trays and liquid sprays. The combined condensed liquids are trays and liquid sprays. The combined condensed liquids are fed through suitable heat exchangers 17X and 18X then a portion of that liquid is recycled to the condenser for cooling of further incoming vapours. A relatively small portion of the vapour stream contains hydrocarbons that remain as gases at temperatures of 37,8 to 93°C (100 to 200°F) and these are further cooled in cooler 20X, pumped to storage by compressor 21X and further cooled by cooler 22X if so required. The vapour temperature exiting pipe 86X is in the order of 371 to 482°C (700 to 900°F) while the final temperature of the exiting liquid and gas products will be close to ambient temperatures.

Once the solid particles, with their deposits of reaction carbon, are discharged from seal end assembly 91X they contact the surface arrangement of outer tube 12X. The combination of drum rotation and inclined advancing elements 43X moves these particles back into the combustion zone. Lifters 100X act to lift these particles and drop them through the atmosphere of combustion gases so that oxygen present in the gas efficiently react with the surface carbon. This reaction produces heat which is absorbed by the particles thereby increasing its temperature. Sufficient combustion gas is added so that the particles temperature increase from approximately 482°C (900°F) to the range of 538 to 704°C (1000°F to 1300°F).

Combustion air is supplied at a pressure of 1,245 kPa to 3,74 kPa (5 to 15 inches water gauge) and is passed through a combination of heat exchangers 404X and 23X such that the gas is heated to more than 260°C (500°F). This preheated combustion air flows through pipes 96X$a$, 96X$b$ and 96X$c$ and exits through a series of high velocity nozzles 406X that ensure turbulent mixing of gas molecules and carbonized particles. Any oxygen not consumed in this initial contact at the nozzles is available to react with carbon throughout zones 34X and 35X as a combination of lifters 101X which extend throughout zone 35X repeatedly lifts and drops the solid particles through the gas atmosphere.

The solid particles are progressively moved towards the recycle and screening assembly 62X during the combustion process. Upon arriving at this assembly, they are fed onto the screen segments 67X where oversize is handled as previously described. The undersize particles, along with crushed fine particles as required, are collected in the segmented annulus under the screen and, as the apparatus 10X rotates, the particles enter openings 64X and continue moving down the annulus until they contact plate 65X. As the apparatus continues to rotate the particles are lifted by plate 65X until an angle is reached where the particles start to discharge into the inner tube 11X through tube 66X, opening 68X and discharge rate adjustment 69X. Once these particles are deposited in the inner tube they are progressively moved and mixed in zone 32X by the arrangement of inclined elements 38X and the configuration of the inner tube sections 56X. The solid particles move under the feed applicators sprays and the cracking reaction and cycle is repeated.

The exhaust gases from the combustion zone, any air leakage through the rotating seals, as well as any steam resulting from coke quenching, is removed continuously from the units by suction from the exhaust system. Exhaust gases pass through the stationary end frame 14X, pass up through discharge pipe and control dampers 80X and 81X, pass through coarse particle removal cyclines 401X, pass through cooling heat exchangers 24X then are scrubbed for removal of fine particulates and noxious gases prior to injection to atmosphere by a suitably designed stack system.

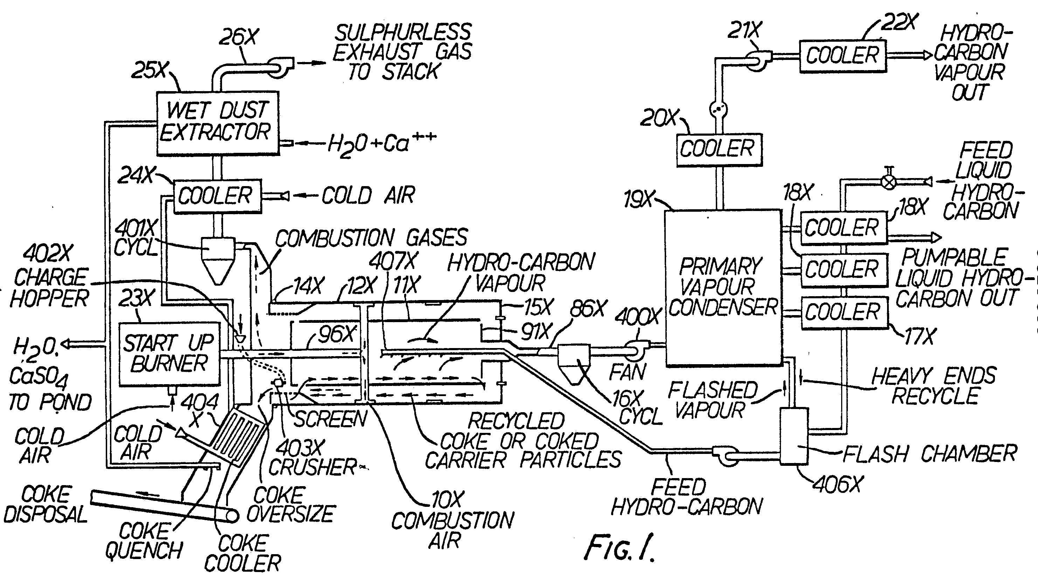

The exhaust system rate of discharge is controlled by a suitable damper arrangement such that the rotating apparatus is kept under a very slight negative pressure. It will also be appreciated that the pressures required for proper operation are dependent on the type and character of the feed and recycle materials so that internal pressure relationships may be altered to obtain the desired gas flows through apparatus 10X. Thus, while subatmospheric pressures are considered preferable in the vapour release and combustion zones, super atmospheric pressures may be desirable under certain feed and recycle conditions. In the preferred form of the invention the pressures in the vapour release zone 33X and the combustion zones 34X are maintained substantially equal to minimize any cross flow of process gases between the two tubes. These pressures are maintained by proper positioning of the damper 80Xa and by proper positioning of dampers and other control means, indicated generally in Figure 1 on the vapour compressor 21 and the fans supplying the combustion air and the various cooler air flows. By these means, hydrocarbon vapours in zone 33X and the combustion gases in zone 34X are prevented from flowing through slots 92X or openings 64X and work in co-operation with their respective sand and mechanical seal arrangements to maintain a separation between the gases.

Although not specifically illustrated, it will be understood that conventional instrumentation will be provided to control the following:

1. Liquid feed rate based on temperature profile and capacity of the hydrocarbon vapour condensing and cleaning systems.
2. Hydrocarbon vapour removal rate adjusted to hold the pressure differential between the vapour zone and the combustion zone at zero.
3. Primary combustion air flow through coolers and burners to maintain the correct quantity of oxygen for the required carbon combustion to provide the process heat requirements.
4. Burner fuel flow as required to maintain correct temperature profiles.
5. Exhaust system damper control to maintain adequate system negative pressure.
6. Cooling water and air flows to maintain temperatures of exiting products such as coke, pumpable liquid hydrocarbon, crack gas and exhaust gases.
7. Control of quantity of crushed and recycled oversized solid particles necessary to maintain an adequate quantity of solids in the rotating unit.
8. Control of temperature profile of the feed liquid passing through the condenser coolers so that proper flashing of low boiling point liquids occur prior to feeding into the rotating unit.
9. Control of coke cooling and quenching systems to ensure proper coke exit temperatures.
10. Main rotary drive power draw and gross weight of the rotating assembly.
11. Continuous monitoring of gas and vapour quality.

The operating sequences are so designed that a loss or reduction in feed will reduce all flows automatically and maintain a proper pressure balance, as well as the proper temperature profiles.

On shut-down, the unit continies to run until all feed liquid in the system has been processed then the rotating unit is stopped. The atmosphere inside the inner and outer tubes is purged by use of steam or a suitable inert gas such as nitrogen in order to prevent any air containing oxygen from entering the system.

In the event of an uncontrolled emergency shut-down suitable vents and by-passes are opened to prevent internal process gases pressurising the unit and leaking outward through the rotating seals between outer tube 12X and the stationary end frames. Steam and water quench as well as inert gas addition may also be required to maintain a safe atmosphere in and around the apparatus.

Since the inner tube area, outer tube area, lift and advance elements as well as the recycle arrangement and the inner tube product end seal are subject to high temperature stresses, corrosion, and erosion, it is desirable to use specific alloy steels, stainless steels or austenitic steels containing nickel and chromium additives to provide creep strength and resistance to chemical attach. Parts can also be protected by proper use of resistant refractory coatings.

In a unit sized for processing 795 m³ (5000 barrels) per day of a 15 to 18° API oil containing 2 to 5 percent by weight of water and sediments, the inner tube has a diameter of approximately 3,6 m (12 feet) and a length of approximately 7,9 m (26 feet) while the outer tube has a diameter of approximately 5,2 m (17 feet) and a length of approximately 9,2 m (30 feet). The speed of rotation, temperatures, pressures, and other variables are set at values which are dependent upon the type and origin of the feed liquid and the quantity of various final products required.

Typical retention times and temperatures for material in the various zones are as indicated in the following Table 1.

# 0 028 666

## TABLE I

| Zone | Retention time | Temperature range |
|---|---|---|
| 1. Mixing zone 32X | 10 sec. to 1 minute | (1000—1400°F) 538—760°C |
| 2. Reaction zone 33X | 20 sec. to 3 minutes | (1000—1400° to 850°F) 538—760 to 454°C |
| 3. Combustion zone 34X | 1 minute to 10 minutes | (850°F to 1000—1400°F) 454—538 to 760°C |
| 4. Recycle area 35X | 10 sec. to 2 minutes | (1000—1400°F) 538—760°C |
| 5. Coke cooling 36X | 1 minute to 5 minutes | (1000—1400°F to 130°F) 538—760 to 54°C |
| 6. Vapour cooling condensing | 2 sec. to 2 minutes | (850°F to 100—150°F) 454—38 to 66°C |
| 7. Exhaust handling | 0.5 sec. to 10 secs. | (1000—1400°F. to 100—200°F) 538—760 to 38—93°C |

In certain cases the cooler—condenser is designed so that the high boiling point bottoms from the condenser are recycled back to the apparatus and cracket to extension.

A 1,527 m (five foot) diameter test unit has been operated as a cracking unit using a Lloydminster Wellhead Crude and Bitumen as present in the oil sands located in the North eastern area of Alberta, Canada. The results from these particular feed samples are as follows. Condenser bottoms were not recycled so these results represent a 1 pass system operation.

### Lloydminster wellhead crude

| Item | Feed | Product |
|---|---|---|
| °API | 16.0 | 23.3 |
| Viscosity at 25°C (77°F) | 1348 c.p. | 6.3 c.p. |
| Sulphur | 3.9% | 3.2% |
| Pour point | −6,67°C (+20°F) | less than 10°C (50°F) |
| Vacuum distillation—liquid | 47% | 86% |
| Vacuum distillation—residue | 53% | 14% |
| Coke produced | — | 11% |
| Crack gas produced | — | 5% |
| Reaction temperature | — | approx. 482°C (900°F) |

### Athabasca oil sands bitumen

| API | 8.8 | 17.0 |
|---|---|---|
| Viscosity at 66°C (150°F) | 1800 c.p. | 49°C (120°F) 6 c.p. |
| Sulphur | 4.3% | 3.9% |
| Pour point | 21,1°C (+70°F) | less than −45,6°C (−50°F) |
| Vacuum distillation—liqued | 11% | 94% |
| Vacuum distillation—residue | 89% | 6% |
| Coke produced | — | 18% |
| Crack gas produced | — | 5% |
| Reaction temperature | — | approx. 482°C (900°F) |

While the preferred forms of the apparatus and process of the invention have been described in detail, it will be appreciated that changes in size, configurations, materials of construction and general design of the apparatus, or changes in the steps of the process may be made within the scope of the appended claims.

## Claims

1. A process for upgrading heavy hydrocarbons, such process employing direct thermal treatment effected in an apparatus having horizontal, concentric, radially spaced inner and outer rotatable tubes (11X, 12X) in which one axial end is the feed end and the opposite axial end is the product end, said inner tube (11X) forming an open cylindrical inner processing zone (33X), said tubes (11X, 12X)

8

## 0 028 666

forming between them an open annular space having a combustion zone (34X) characterised in that the process comprises continuously advancing hot particulate solids through the inner tube (11X) from the feed end to the product end and back through the annular space, depositing the hydrocarbons as a liquid onto the hot solids, cascading and mixing the solids and hydrocarbons as they advance through the inner processing zone (33X) to achieve beneficial heat transfer and thereby vaporize hydrocarbons and form carbon on the solids, withdrawing by suction the hydrocarbon vapours produced in the inner tube (11X), transferring carbon-coated solids from the product end of the inner tube (11X) into the combustion zone (34X) and repeatedly raising and dropping the carbon-coated solids in the combustion zone (34X) while introducing oxygen-containing gas thereinto to burn at least part of the carbon and heat the remainder of the solids, transferring burned hot solids from the feed end of the annular withdrawing by suction vapours produced in the combustion zone (34X), and maintaining seals against substantial gaseous flow between the combustion zone (34X) and the inner processing zone (33X).

2. Apparatus for carrying out the process according to claim 1, the apparatus comprising a substantially horizontal rotatable inner tube (11X) defining an inner processing zone therein, a rotatable outer tube (12X) generally concentric with the inner tube and circumscribing the inner tube (11X), the tubes being rigidly interconnected for rotation together and cooperating to form an annular space, the annular space providing a combustion zone (34X), and means (96X) for introducing oxygen-bearing gas into the combustion zone (34X), characterised in that the apparatus further comprises a stationary recycle end assembly (14X) associated with the outer tube for substantially sealing a recycle end thereof, a stationary product end assembly (301X) associated with the outer tube (12X) for substantially sealing a product end thereof, inner advancing means (38X, 39X, 40X) secured to the inner surface of the inner tube (11X) and extending inwardly by only a short distance so as to leave the inner zone substantially open, outer advancing means (43X, 44X) secured to the inner surface of the outer tube (12X) and extending inwardly by only a short distance so as to leave the annular space substantially open, feed means (407X) extending into the inner processing zone (33X) for depositing the liquid thereinto onto particulate solids being advanced therethrough, vapour removal means (86Xa, 86Xb) extending into the inner processing zone (33X) for withdrawing hydrocarbon vapours from the zone, said vapour removal means maintaining a negative pressure relative to atmosphere pressure, means (91X) connected with the inner tube at the product end, for transferring carbon-carrying solids from the inner processing zone (33X) to the combustion zone (34X), said means (91X) cooperating with the carbon-carrying solids to prevent significant gas movement between the inner processing zone (33X) and the combustion zone (34X), means for sealing the inner tube (11X) at the recycle end, said means including recycle means (66X) connecting the recycle end of the annular space with the inner processing zone (33X), the recycle means (66X) cooperating with the hot solids to prevent significant gas movement between the inner processing zone (33X) and the combustion zone (34X), means (14X, 80X, 81X) for withdrawing combustion gases from the combustion zone (34X), said means maintaining a negative pressure relative to atmospheric pressure, in the combustion zone (34X).

3. Apparatus as claimed in claim 2, characterised by controlling means for the vapour removal means (86Xa, 86Xb) and the combustion gas removal means (14X, 80X, 81X) so as to maintain substantially equal pressures in the inner processing zone (33X) and the combustion zone (34X).

4. Apparatus as claimed in claim 2 or claim 3, characterised by lifting means (100X) connected to the inner surface of the outer tube (12X) and extending along at least a portion of the combustion zone (34X).

5. Apparatus as claimed in any one of claims 2 to 4, characterised by means (67X) positioned between the combustion zone (34X) and the recycle means (66X) for screening the solids advancing from the combustion zone (34X) to recover an oversize fraction, means (36X) connected with said screening means (67X) for removing oversize solids to discharge them from the apparatus, and means connecting the screening means (67X) and the recycle means (66X) for transferring undersize solids to the recycle means (66X).

6. Apparatus as claimed in claim 5, characterised by crusher means (403X) actuable to crush oversize solids retained by the screening means (67X).

7. Apparatus as claimed in any one of claims 1 to 6, characterised by means (68X) associated with the recycle means (66X) for controlling the rate at which solids are recycled.

8. Apparatus as claimed in any one of claims 1 to 6, characterised by preheating means (23X) for preheating the oxygen-bearing gas before it is introduced into the combustion zone (34X).

**Revendications**

1. Procédé pour la valorisation d'hydrocarbures lourds, ce procédé utilisant un traitement thermique direct réalisé dans un appareil comportant des tubes rotatifs interne et externe (11X, 12X) espacés en direction radiale, concentriques, horizontaux, une extrémité axiale étant l'extrémité d'alimentation, tandis que l'extrémité axiale opposée est l'extrémité de sortie de produit, le tube interne (11X) formant une zone de traitement interne cylindrique libre (33X), les tubes (11X, 12X) formant entre eux un espace annulaire libre comprenant une zone de combustion (34X), caractérisé en ce qu'il

9

**0 028 666**

comprend le déplacement continu de particules solides chaudes à travers le tube interne (11X) depuis l'extrémité d'alimentation vers l'extrémité de produit avec ensuite retour à travers l'espace annulaire, le dépôt des hydrocarbures sous forme d'un liquide sur les solides chauds, le mouvement en cascade et le mélange des solides et des hydrocarbures au fur et à mesure qu'ils s'avancent à travers la zone de traitement interne (33X) pour obtenir un transfert de chaleur bénéfique, en vaporisant ainsi les hydrocarbures et en formant du carbone sur les solides, l'enlèvement, par aspiration, des vapeurs hydrocarburées produites dans le tube interne (11X), le transfert des solides enrobés de carbone depuis l'extrémité de produit du tube interne (11X) dans la zone de combustion (34X), et l'élévation et la chute répétées des solides enrobés de carbone dans la zone de combustion (34X), tandis que l'on y introduit un gaz contenant de l'oxygène pour brûler au moins une partie de carbone et chauffer le reste des solides, le transfert des solides chauds brûlés depuis l'extrémité d'alimentation de l'espace annulaire, vers l'extrémité d'alimentation du tube interne, l'enlèvement, par aspiration, des vapeurs produites dans la zone de combustion (34X), et le maintien de joints empêchant une circulation gazeuse importante entre la zone de combustion (34X) et la zone de traitement interne (33X).

2. Appareil pour la mise en oeuvre du procédé suivant la revendication 1, comprenant un tube interne rotatif (11X), essentiellement horizontal, formant une zone de traitement interne, un tube externe rotatif (12X) qui est d'une façon générale concentrique au tube interne (11X) en entourant ce dernier, ces tubes étant reliés rigidement ensemble pour permettre leur rotation simultanée et coopérant pour former un espace annulaire, celui-ci formant une zone de combustion (34X), et un dispositif (96X) permettant l'introduction d'un gaz comportant de l'oxygène dans la zone de combustion (34X), caractérisé en ce qu'il comprend en outre un ensemble extrême fixe de recyclage (14X) associé au tube externe pour l'obturation pratiquement totale d'une extrémité de recyclage de celui-ci, un ensemble extrême fixe de sortie de produit (301X) associé au tube externe (12X) pour l'obturation pratiquement totale d'une extrémité de sortie de produit de celui-ci, des éléments d'avancement internes (38X, 39X, 40X) fixés à la surface interne du tube interne (11X) et s'étendant vers l'intérieur sur une courte distance seulement afin de laisser la zone interne pratiquement libre, des éléments d'avancement externes (43X, 44X) fixés à la surface interne du tube externe (12X) et s'étendant vers l'intérieur sur une courte distance seulement de manière à laisser l'espace annulaire pratiquement libre, un dispositif d'alimentation (407X) s'étendant dans la zone de traitement interne (33X) pour y déposer le liquide sur les particules solides s'avançant à travers cette zone, un dispositif d'enlèvement de vapeurs (86Xa, 86Xb) s'étendant dans la zone de traitement interne (33X) pour l'enlèvement des vapeurs hydrocarburées hors de cette zone, ce dispositif d'enlèvement de vapeurs entretenant une pression négative par rapport à la pression atmosphérique, un dispositif (91X) relié au tube interne à l'extrémité de sortie de produit, pour le transfert des solides porteurs de carbone depuis la zone de traitement interne (33X) vers la zone de combustion (34X), ce dispositif (91X) coopérant avec les solides porteurs de carbone pour empêcher un déplacement important de gaz entre le zone de traitement interne (33X) et la zone de combustion (34X), un dispositif pour obturer le tube interne (11X) à l'extrémité de recyclage, ce dispositif comprenant un système de recyclage (66X) reliant l'extrémité de recyclage de l'espace annulaire à la zone de traitement interne (33X), ce système de recyclage (66X) coopérant avec les solides chauds pour empêcher un déplacement important de gaz entre la zone de traitement interne (33X) et la zone de combustion (34X), et un dispositif (14X, 80X, 81X) pour l'enlèvement des gaz de combustion hors de la zone de combustion (34X), ce dispositif entretenant une pression négative par rapport à la pression atmosphérique dans la zone de combustion (34X).

3. Appareil suivant la revendication 2, caractérisé en ce qu'il comprend des moyens de réglage pour la dispositif d'enlèvement de vapeurs (86Xa, 86Xb) et le dispositif d'enlèvement de gaz de combustion (14X, 80X, 81X) de manière à entretenir des pressions pratiquement égales dans la zone de traitement interne (33X) et la zone de combustion (34X).

4. Appareil suivant la revendication 2 ou 3, caractérisé en ce qu'il comprend des éléments élévateurs (100X) reliés à la surface interne du tube externe (12X) et s'étendant le long d'au moins une partie de la zone de combustion (34X).

5. Appareil suivant l'une quelconque des revendications 2 à 4, caractérisé en ce qu'il comprend un dispositif (67X) prévu entre la zone de combustion (34X) et le système de recyclage (66X) pour tamiser les solides s'avançant depuis la zone de combustion (34X) en vue de la récupération de la fraction refusée par le tamis, un dispositif (36X) relié au dispositif de tamisage (67X) pour l'enlèvement des solides refusés par le tamis en vue de leur déchargement hors de l'appareil, et un dispositif reliant de dispositif de tamisage (67X) et le système de recyclage (66X) pour transférer les solides ayant traversé le tamis au système de recyclage (66X).

6. Appareil suivant la revendication 5, caractérisé en ce qu'il comprend un dispositif concasseur (403X) pouvant agir pour écraser les solides refusés et retenus par le dispositif de tamisage (67X).

7. Appareil suivant l'une quelconque des revendications 1 à 6, caractérisé en ce qu'il comprend un dispositif (68X) associé au système de recyclage (66X) pour le réglage de la vitesse à laquelle les solides sont recyclés.

8. Appareil suivant l'une quelconque des revendications 1 à 6, caractérisé en ce qu'il comprend un dispositif de préchauffage (23X) assurant le préchauffage du gaz porteur d'oxygène avant son introduction dans la zone de combustion (34X).

**Patentansprüche**

1. Verfahren zur Aufbereitung von schweren Kohlenwasserstoffen durch Anwendung einer direkten termischen Behandlung, die in einer Vorrichtung mit horizontalen, konzentrischen, radial im Abstand voneinander angeordneten inneren und äußeren drehbaren Rohren (11X, 12X) durchgeführt wird, worin ein axiales Ende das Beschickungsende und das gegenüberliegende axiale Ende das Produktende darstellen, wobei das innere Rohr (11X) eine offene zylindrische innere Behandlungszone (33X) bildet und die Rohre (11X, 12X) zwischen sich einen offenen ringförmigen Raum mit einer Verbrennungszone (34X) bilden, dadurch gekennzeichnet, daß das Verfahren umfaßt das kontinuierliche Vorwärtsbewegen von heißen teilchenförmigen Feststoffen durch das innere Rohr (11X) von dem Beschickungsende zu dem Produktende und zurück durch den ringförmigen Raum, das Abscheiden der Kohlenwasserstoffe in Form einer Flüssigkeit auf den heißen Feststoffen, das kaskadenförmige Herunterfallen und Mischen der Feststoffe und Kohlenwasserstoffe, während sie sich durch die innere Behandlungszone (33X) vorwärtsbewegen, um eine vorteilhafte Wärmeübertragung zu erzielen und dadurch die Kohlenwasserstoffe zu verdampfen und Kohlenstoff auf den Feststoffen zu bilden, das Absaugen der in dem inneren Rohr (11X) gebildeten Kohlenwasserstoffdämpfe, das Überführen der mit Kohlenstoff überzogenen Feststoffe aus dem Produktende des inneren Rohres (11X) in die Verbrennungszone (34X) und das wiederholte Aufwirbeln und Herabfallenlassen der mit Kohlenstoff überzogenen Feststoffe in der Verbrennungzone (34X), während ein Sauerstoff enthaltendes Gas eingeführt wird, um mindesten einen Teil des Kohlenstoffs zu verbrennen und den Rest der Feststoffe zu erhitzen, das Überführen der verbrannten heißen Feststoffe aus dem Beschickungsende des ringförmigen Raums in das Beschickungsende des inneren Rohres, das Absaugen der in der Verbrennungszone (34X) gebildeten Dämpfe und die Aufrechterhaltung von Abdichtungen gegenüber dem im wesentlichen gasförmigen Strom zwischen der Verbrennungzone (34X) und der inneren Behandlungszone (33X).

2. Vorrichtung zur Durchführung des Verfahrens nach Anspruch 1, die umfaßt ein im wesentlichen horizontales drehbares inneres Rohr (11X), das eine innere Behandlungszone darin begrenzt, ein drehbares äußeres Rohr (12X), das im allgemeinen konzentrisch zu dem inneren Rohr angeordnet ist und das innere Rohr (11X) umgibt, wobei die Rohre starr miteinander verbunden sind zur Erzielung einer gemeinsamen Rotation und Kooperation unter Bildung eines ringförmigen Raumes, der eine Verbrennungzone (34X) bildet, und eine Einrichtung (96X) zur Einführung von Sauerstoff enthaltendem Gas in die Verbrennungzone (34X), dadurch gekennzeichnet, daß die Vorrichtung außerdem umfaßt eine stationäre Rezyklisierungsendanordnung (14X), die mit dem äußeren Rohr verbunden ist, um ein Rezyklisierungsende davon im wesentlichen abzudichten, eine stationäre Produktendanordnung (301X), die mit dem äußeren Rohr (12X) verbunden ist, um ein Produktende desselben im wesentlichen abzudichten, eine innere Transporteinrichtung (38X, 39X, 40X), die an der inneren Oberfläche des inneren Rohres (11X) befestigt ist und sich nur auf einer kurzen Strecke nach innen erstreckt, so daß die innere Zone im wesentlichen offen bleibt, eine äussere Transporteinrichtung (43X, 44X), die an der inneren Oberfläche des äußeren Rohres (12X) befestigt ist und sich nur über eine kurze Strecke nach innen erstreckt, so daß der ringförmige Raum im wesentlichen offen bleibt, eine Beschickungseinrichtung (407X), die sich in die innere Behandlungszone (33X) erstreckt, für die Abscheidung der Flüssigkeit darin auf den hindurchtransportierten teilchenförmigen Feststoffen, eine Dampfentfernungseinrichtung (86Xa, 86Xb), die sich in die innere Behandlungszone (33X) erstreckt, zum Abziehen der Kohlenwasserstoffdämpfe aus der Zone, wobei die Dampfentfernungseinrichtung einen negativen Druck, bezogen zuf Atmosphärendruck, aufrechterhält, eine Einrichtung (91X), die mit dem inneren Rohr an dem Produktende verbunden ist, zur Überführung der Kohlenstoff tragenden Feststoffe aus der inneren Behandlungszone (33X) in die Verbrennungszone (34X), wobei die Einrichtung (91X) mit den Kohlenstoff tragenden Feststoffen kooperiert, um eine signifikante Gasbewegung zwischen der inneren Behandlungszone (33X) und der Verbrennungszone (34X) zu verhindern, eine Einrichtung zum Abdichten des inneren Rohres (11X) an dem Rezyklisierungsende, die umfaßt eine Rezyklisierungseinrichtung (66X), die das Rezyklisierungsende des ringförmigen Raumes mit der inneren Behandlungszone (33X) verbindet, wobei die Rezyklisierungseinrichtung (66X) mit den heißen Feststoffen kooperiert, um eine signifikante Gasbewegung zwischen der inneren Behandlungszone (33X) und der Verbrennungszone (34X) zu verhindern, eine Einrichtung (14X, 80X, 81X) zum Abziehen von Verbrennungsgasen aus der Verbrennungszone (34X), die einen negativen Druck, bezogen auf Atmosphärendruck, in der Verbrennungszone (34X) aufrechterhält.

3. Vorrichtung nach Anspruch 2, gekennzeichnet durch eine Kontroll- bzw. Steuereinrichtung für die Dampfentfernungseinrichtung (86Xa, 86Xb) und die Verbrennungsgasentfernungseinrichtung (14X, 80X, 81X), um in der inneren Behandlungszone (33X) und der Verbrennungszone (34X) im wesentlichen gleiche Drucke aufrechtzuerhalten.

4. Vorrichtung nach Anspruch 2 oder 3, gekennzeichnet durch eine mit der inneren Oberfläche des äußeren Rohres (12X) verbundene Hebeeinrichtung (100X), die sich entlang mindestens eines Teils der Verbrennungszone (34X) erstreckt.

5. Vorrichtung nach einem der Ansprüche 2 bis 4, gekennzeichnet durch eine Einrichtung (67X) die zwischen der Verbrennungszone (34X) und der Rezyklisierungseinrichtung (66X) angeordnet ist, zum Sieben der aus der Verbrennungszone (34X) vorwärtsbewegten Feststoffe, um eine übergroße Fraktion abzutrennen, eine Einrichtung (36X), die mit der Siebeinrichtung (67X) verbunden ist, zur Entfernung der übergroßen Feststoffe, um sie aus der Vorrichtung auszutragen, und eine Einrichtung, welche die Siebeinrichtung (67X) und die Rezyklisierungseinrichtung (66X) verbindet, zur Überführung der Feststoffe mit Untergröße in die Rezyklisierungseinrichtung (66X).

6. Vorrichtung nach Anspruch 5, gekennzeichnet durch eine Zerkleinerungseinrichtung (403X), die so betätigt werden kann, daß sie die von der Siebeinrichtung (67X) zurückgehaltenen übergroßen Feststoffe zerkleinert.

7. Vorrichtung nach einem der Ansprüche 1 bis 6, gekennzeichnet durch eine Einrichtung (68X), die mit der Rezyklisierungseinrichtung (66X) assoziert ist, zur Kontrolle bzw. Steuerung der Rate, mit der die Feststoffe rezyklisiert werden.

8. Vorrichtung nach einem der Ansprüche 1 bis 6, gekennzeichnet durch eine Vorerwärmungseinrichtung (23X) zum Vorerwärmen des Sauerstoff enthaltenden Gases, bevor es in die Verbrennungszone (34X) eingeführt wird.

FIG. 1.

26X

SULPHURLESS
EXHAUST GAS
TO STACK

25X

WET DUST
EXTRACTOR

24X

$H_2O + Ca^{++}$

COOLER — COLD AIR

401X
CYCL

COMBUSTION GASES

402X
CHARGE
HOPPER

14X  12X  11X

407X  HYDRO-CARBON
VAPOUR

15X

96X

91X

23X

START UP
BURNER

$H_2O$,
$CaSO_4$
TO POND

COLD
AIR

COLD
AIR

404
X

403X
CRUSHER

SCREEN

RECYCLED
COKE OR COKED
CARRIER PARTICLES

10X
COMBUSTION
AIR

COKE
DISPOSAL

COKE
QUENCH

COKE
COOLER

COKE
OVERSIZE

21X

22X

COOLER

HYDRO-
CARBON
VAPOUR
OUT

20X

COOLER

19X

18X

PRIMARY
VAPOUR
CONDENSER

FEED
LIQUID
HYDRO-
CARBON

18X

COOLER

COOLER

PUMPABLE
LIQUID HYDRO-
CARBON OUT

86X

400X

FAN

16X
CYCL

FLASHED
VAPOUR

COOLER

17X

HEAVY ENDS
RECYCLE

FLASH CHAMBER

406X

FEED
HYDRO-CARBON

0028666

FIG. 2.

0028666

FIG. 3.

FIG. 4.

FIG. 5.

FIG. 6.